# FASCICULE DE BREVET EUROPEEN

(11) **EP 3 309 075 B1**
(45) Date de publication et mention de la délivrance du brevet: **04.12.2019**
(21) Numéro de dépôt: 17194655.1
(22) Date de dépôt: 04.10.2017
(51) Int. Cl.: B64D 33/02, B64D 29/00

(54) **NACELLE D'AERONEF COMPRENANT UNE LIAISON ENTRE UNE ENTREE D'AIR ET UNE MOTORISATION**
LUFTFAHRZEUGGONDEL, DIE EINE VERBINDUNG ZWISCHEN EINEM LUFTEINLASS UND EINER MOTORISIERUNG UMFASST
AIRCRAFT NACELLE COMPRISING A CONNECTION BETWEEN AN AIR INTAKE AND AN ENGINE

(30) Priorité: 13.10.2016 FR 1659895
(43) Date de publication de la demande: 18.04.2018
(73) Titulaire: Airbus Operations, 31060 Toulouse (FR)
(72) Inventeur: PORTE, Alain, 31770 COLOMIERS (FR); ALBET, Gregory, 31190 GREPIAC (FR)
(74) Mandataire: Fantin, Laurent

(56) Documents cités:
- EP-A1- 1 013 910
- EP-A1- 2 998 226
- WO-A1-2011/086281
- FR-A1- 2 960 216
- GB-A- 2 259 954
- US-A- 5 706 648
- US-A1- 2013 098 471
- US-A1- 2013 121 814
- US-A1- 2015 007 896

## Description

La présente invention se rapporte à une nacelle d'aéronef comprenant une liaison entre une entrée d'air et une motorisation.

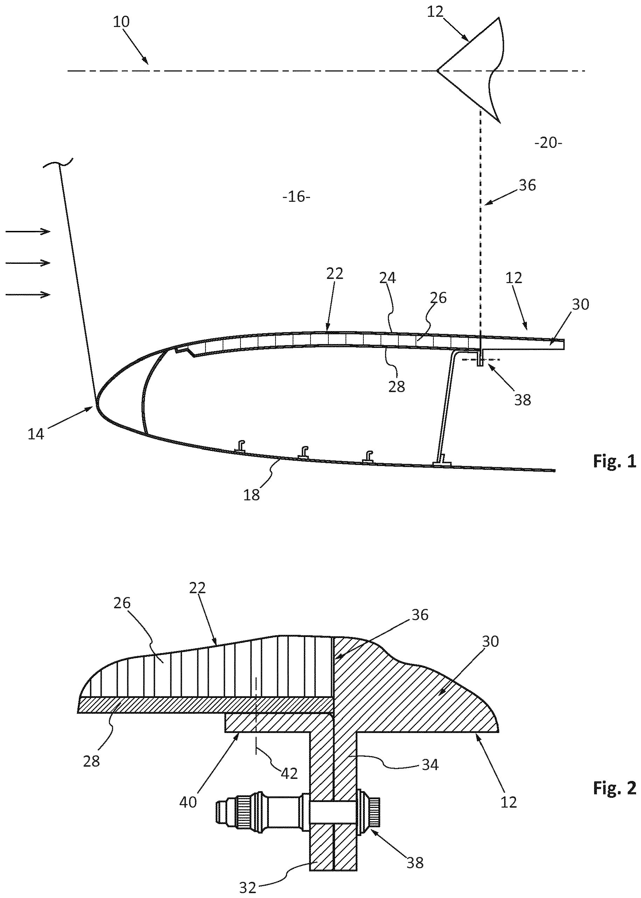

Comme illustré sur la figure 1, une nacelle d'aéronef comprend à l'avant une entrée d'air 10 permettant de canaliser un flux d'air en direction d'une motorisation 12.

Pour la suite de la description, la direction longitudinale correspond à la direction de l'axe de la motorisation. Un plan longitudinal est un plan qui contient l'axe de la motorisation. Un plan transversal est un plan perpendiculaire à l'axe de la motorisation. Une direction radiale est une direction perpendiculaire à l'axe de la motorisation. Les termes avant et arrière font référence au sens d'écoulement du flux d'air dans la nacelle. L'avant correspond à une zone où le flux d'air rentre dans la nacelle et l'arrière à une zone où le flux d'air sort de la nacelle. L'entrée d'air 10 comprend une lèvre 14 qui est prolongée à l'intérieur de la nacelle par un premier conduit 16 de sections sensiblement circulaires, et à l'extérieur de la nacelle par une paroi extérieure 18 de sections sensiblement circulaires. La motorisation comprend un deuxième conduit 20 susceptible d'être disposé dans le prolongement du conduit intérieur 16.

Selon un mode de réalisation, le premier conduit 16 est délimité par des panneaux acoustiques 22 juxtaposés sur toute la circonférence du premier conduit 16 et qui comprennent chacun, selon la direction radiale, en s'écartant de l'axe de la motorisation, une couche acoustiquement résistive 24, au moins une couche alvéolaire 26 et une couche réflectrice 28.

Le deuxième conduit 20 est également délimité par des panneaux 30 juxtaposés sur toute la circonférence du deuxième conduit 20.

Comme illustré sur la figure 2, l'entrée d'air 10 est reliée à la motorisation 12 par une liaison qui comprend une première collerette annulaire 32 reliée au premier conduit 16 et une deuxième collerette annulaire 34 solidaire du deuxième conduit 20. Les deux collerettes annulaires 32 et 34 sont plaquées l'une contre l'autre au niveau d'un plan de jonction 36 sensiblement perpendiculaire à la direction longitudinale, et maintenues ainsi par des éléments de liaison 38, par exemple des boulons ou des rivets, qui traversent les collerettes annulaires 32, 34 et dont les axes sont parallèles à la direction longitudinale.

Selon un premier mode de réalisation, la première collerette annulaire 32 est réalisée d'un seul tenant avec la couche réflectrice 28 et forme un L avec la couche réflectrice 28. Pour assurer la reprise des efforts entre les deux ailes du L, la première collerette annulaire 32 et la couche réflectrice 28 sont métalliques.

Selon un deuxième mode de réalisation visible sur la figure 2, la première collerette 32 correspond à une première aile d'une première bride 40 en L dont la seconde aile est reliée à la couche réflectrice 28. Selon ce mode de réalisation, seule la première bride 40 en L est métallique. Le panneau acoustique, et notamment la couche réflectrice 28, sont réalisés en matériau composite ce qui permet de réduire la masse embarquée. Selon ce deuxième mode de réalisation, la liaison entre l'entrée d'air et la motorisation comprend une première série d'éléments de liaison 38 reliant les première et deuxième collerettes annulaires 32 et 34 et une deuxième série d'éléments de liaison 42 reliant la première bride 40 en L et les panneaux acoustiques 22 du premier conduit 16.

Les panneaux 30 du deuxième conduit 20 peuvent être également en matériau composite. Dans ce cas, comme pour la première collerette annulaire 32, la deuxième collerette annulaire 34 est intégrée à une deuxième bride en L métallique. Dans ce cas, la liaison entre l'entrée d'air et la motorisation comprend une première série d'éléments de liaison reliant les première et deuxième brides en L, une deuxième série d'éléments de liaison reliant la première bride en L et les panneaux acoustiques du premier conduit 16 et une troisième série d'éléments de liaison reliant la deuxième bride en L et les panneaux 30 du deuxième conduit 20. Selon ce mode de réalisation, le gain de masse généré par l'utilisation des matériaux composites pour les panneaux 30 du deuxième conduit 20 est réduit en raison de la présence de trois séries d'éléments de liaison.

La présente invention propose de remédier aux inconvénients de l'art antérieur. Le document US2015/0007896, qui est considéré l'état de la technique plus proche, divulgue une nacelle avec des lames de liaison.

A cet effet, l'invention a pour objet une nacelle d'aéronef selon la revendication 1.

L'invention permet de supprimer les collerettes annulaires et ainsi de réduire la masse embarquée. Selon un autre avantage, il est possible de relier l'entrée d'air et la motorisation avec seulement deux séries d'éléments de liaison et des lames de liaison réalisées en matériau composite. Les lames de centrage facilitent le montage car elles permettent de centrer les deux conduits l'un par rapport à l'autre avant la mise en place des éléments de liaison des lames de liaisons.

Selon d'autres caractéristiques, chaque lame de liaison comprend :
- une portion médiane courbe, intercalée entre les première et deuxième zones de jonction et excentrée par rapport à au moins une des première et deuxième zones de jonction, et/ou
- chaque lame de liaison comprend une extrémité, orientée vers l'arrière de la nacelle, recourbée vers l'extérieur de la nacelle.

Selon un mode de réalisation, chaque deuxième élément de liaison est un boulon qui comprend une vis avec une tige filetée et une tête ainsi qu'un écrou configuré pour se visser sur la tige filetée, la lame de liaison étant intercalée entre une couche extérieure du deuxième conduit et la tête de la vis, l'écrou étant solidarisé à la couche extérieure.

La liaison comprend au moins trois lames de centrage réparties régulièrement autour du premier conduit, intercalées entre les lames de liaison.

Selon une autre caractéristique, la deuxième extrémité des lames de centrage est recourbée vers l'extérieur de la nacelle.

Selon une autre caractéristique, la deuxième extrémité des lames de centrage et/ou une paroi extérieure du deuxième conduit comprennent un revêtement ou sont réalisées en un matériau favorisant le glissement des lames de centrage sur la surface de la paroi extérieure du deuxième conduit.

Selon une autre caractéristique, le deuxième conduit comprend, pour chaque lame de centrage, une encoche ménagée dans une paroi extérieure du deuxième conduit, qui s'étend selon la direction longitudinale et qui est configurée pour loger une lame de centrage, la largeur de chaque encoche étant sensiblement égale à la largeur de chaque lame de centrage pour empêcher la rotation du premier conduit par rapport au deuxième conduit.

D'autres caractéristiques et avantages ressortiront de la description qui va suivre de l'invention, description donnée à titre d'exemple uniquement, en regard des dessins annexés sur lesquels :
- la figure 1 est une coupe d'une partie inférieure et avant d'une nacelle d'un aéronef qui illustre un mode de réalisation de l'art antérieur,
- la figure 2 est une coupe d'une liaison entre une entrée d'air et une motorisation qui illustre un mode de réalisation de l'art antérieur,
- la figure 3 est une coupe d'une partie inférieure et avant d'une nacelle d'un aéronef qui illustre une première variante de l'invention,
- la figure 4 est une coupe selon un plan PIV de la figure 3 d'un conduit intérieur d'une entrée d'air visible sur la figure 3,
- la figure 5 est une coupe selon la ligne V-V de la figure 4 d'une liaison entre une entrée d'air et une motorisation qui illustre un mode de réalisation de l'invention,
- la figure 6 est une coupe selon la ligne VI-VI de la figure 4 d'une liaison entre une entrée d'air et une motorisation qui illustre un mode de réalisation de l'invention, et
- la figure 7 est une coupe selon la ligne V-V d'une liaison entre une entrée d'air et une motorisation qui illustre un autre mode de réalisation de l'invention.

Comme pour l'art antérieur, une nacelle d'aéronef selon l'invention comprend à l'avant une entrée d'air 50 avec un premier conduit 52 configuré pour canaliser un flux d'air en direction d'un deuxième conduit 54 d'une motorisation 56. Les premier et deuxième conduits 52 et 54 sont bout à bout au niveau d'un plan de jonction 58 sensiblement perpendiculaire à la direction longitudinale.

Le premier conduit 52 comprend au moins un panneau acoustique 60, généralement plusieurs panneaux acoustiques 60 juxtaposés sur la circonférence du premier conduit 52. Chaque conduit acoustique 60 comprend selon la direction radiale, en s'écartant de l'axe de la motorisation, une couche acoustiquement résistive 62, au moins une couche alvéolaire 64 et une couche réflectrice 66.

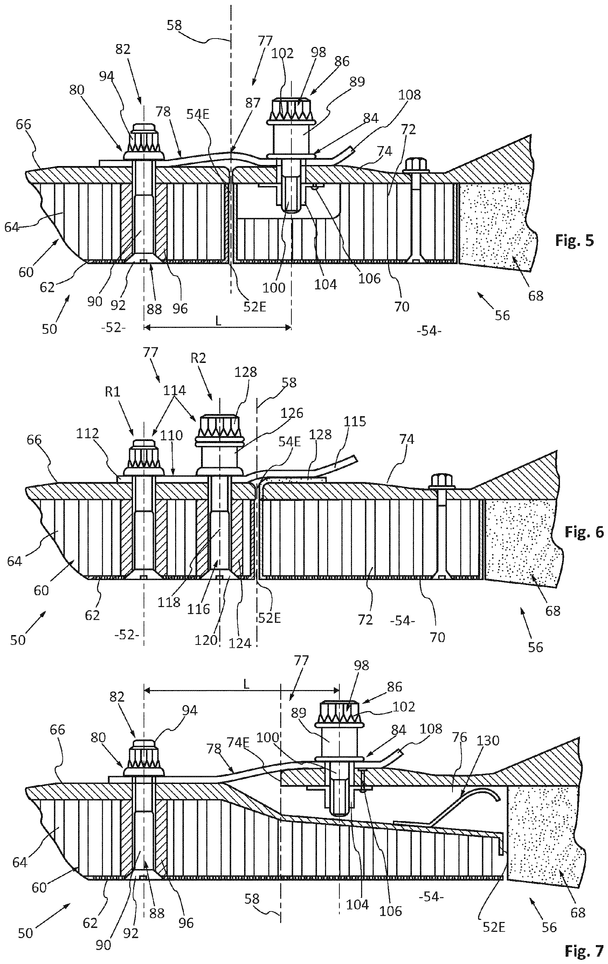

Généralement, le deuxième conduit 54 comprend au moins un panneau 68, généralement plusieurs panneaux 68 juxtaposés sur la circonférence du deuxième conduit 54. Selon une configuration visible sur les figures 5 et 6, les panneaux 68 sont des panneaux acoustiques qui comprennent chacun selon la direction radiale, en s'écartant de l'axe de la motorisation, une couche acoustiquement résistive 70, au moins une couche alvéolaire 72 et une couche réflectrice 74. Par couche, on entend aussi bien une couche qu'une pluralité de couches superposées.

Dans le cas d'une motorisation double flux comprenant une soufflante, le deuxième conduit 54 entoure la soufflante.

Les panneaux acoustiques 62 ne sont pas plus détaillés car ils sont connus de l'homme du métier. Il en est de même pour les panneaux 68 du deuxième conduit 54 qui sont connus sous la dénomination « Fan case » en anglais.

Quel que soit le mode de réalisation, chaque panneau 62 ou 68 comprend une paroi extérieure, comme par exemple la couche réflectrice 66 ou 74.

Selon un mode de réalisation visible sur les figures 5 et 6, chaque panneau acoustique 60 comprend un chant 52E disposé dans un plan transversal et chaque panneau 68 comprend un chant 54E disposé dans un plan transversal, les deux chants 52E et 54E étant plaqués l'un contre l'autre au niveau du plan de jonction 58.

Selon un autre mode de réalisation visible sur la figure 7, la paroi extérieure 74 de chaque panneau 68 s'étend vers l'avant de la nacelle par rapport au reste du panneau 68. Son extrémité 74E est positionnée approximativement dans le plan de jonction 58. Ainsi, la paroi extérieure 74 forme un logement 76 configuré pour recevoir l'extrémité 52E des panneaux acoustiques 60 qui s'étendent au-delà du plan de jonction 58.

L'entrée d'air 50 et la motorisation 56 sont reliées par une liaison 77 qui comprend des lames de liaison 78 qui comportent chacune une première zone de jonction 80 reliée au premier conduit 52 de l'entrée d'air 50 par au moins un premier élément de liaison 82 et une seconde zone de jonction 84 reliée au deuxième conduit 54 de la motorisation 56 par au moins un deuxième élément de liaison 86.

Les premier et deuxième éléments de liaison 82 et 86 comprennent chacun une tige orientée selon la direction radiale et les première et deuxième zones de jonction 80, 84 comprennent pour chaque premier ou deuxième élément de liaison 82, 86 un orifice de passage. A titre d'exemple, un premier ou deuxième élément de liaison 82 et 86 peut être un boulon, une vis, un rivet ou autre.

Par lame, on entend une pièce qui a une épaisseur (dimension prise selon la direction radiale) nettement inférieure à sa largeur (dimension prise selon la circonférence) et/ou sa longueur (dimension prise de la direction longitudinale). Naturellement, une lame est configurée pour se déformer de manière élastique selon une direction privilégiée perpendiculaire à sa largeur.

Chaque lame de liaison 78 est positionnée de manière à se déformer en fonctionnement de manière élastique selon la direction radiale. Ainsi, pour chaque lame de liaison 78, une de ses première et deuxième zones de jonction 80, 84 peut se déplacer selon la direction radiale par rapport à l'autre zone de jonction 80, 84, lorsqu'un effort orienté selon la direction radiale, ne dépassant pas un seuil donné, est exercé entre les premier et deuxième conduits 52, 54.

Chaque lame de liaison 78 comprend une portion médiane 87 courbe, intercalée entre les première et deuxième zones de jonction 80, 84 et excentrée par rapport à au moins une des première et deuxième zones de jonction 80, 84. Cette portion médiane 87 favorise la déformation élastique de la lame de liaison 78.

La liaison 77 entre l'entrée d'air 50 et la motorisation 56 comprend plusieurs lames de liaison 78 réparties sur toute la circonférence de la nacelle.

De préférence, les lames de liaison 78 s'étendent sur des secteurs angulaires θ identiques pour équilibrer les efforts.

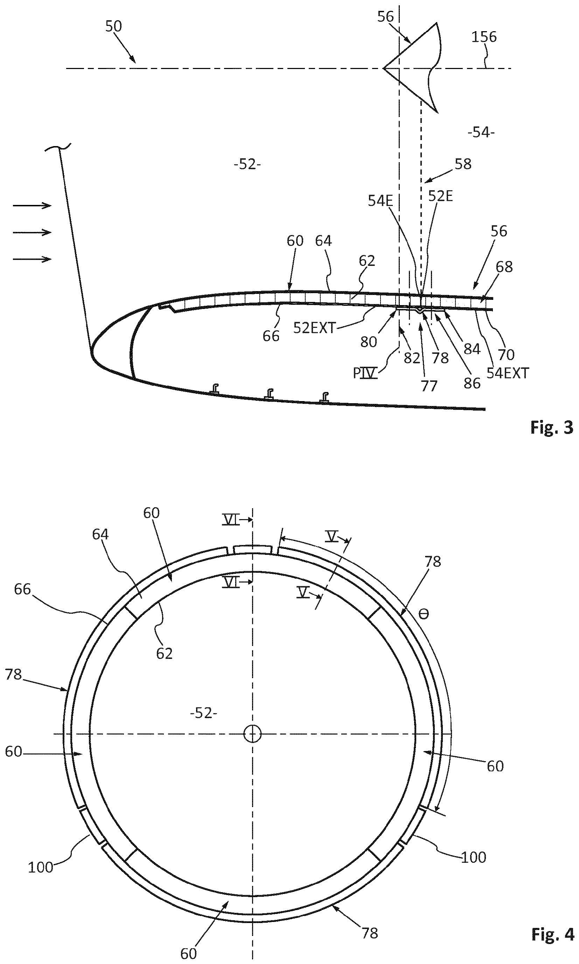

Sur l'exemple illustré par la figure 4, la nacelle comprend trois lames de liaison 78 qui s'étendent chacune sur un secteur angulaire d'environ 120°.

La distance L entre les première et deuxième zones de jonction 80, 84 peut être plus ou moins longue comme illustré sur les figures 5 et 7.

Les premiers éléments de liaison 82 sont répartis, par exemple, selon deux rangées qui s'étendent dans des plans transversaux différents, sur toute la circonférence de la nacelle, les premiers éléments de liaison 82 étant régulièrement répartis sur chacune des rangées. Chaque premier élément de liaison 82 est un boulon qui comprend une vis 88 avec une tige filetée 90 et une tête 92 ainsi qu'un écrou 94 configuré pour se visser sur la tige filetée 90, la lame de liaison 78 étant intercalée entre la couche réflectrice 66 et l'écrou 94. Pour chaque premier élément de liaison 82, le panneau acoustique 60 comprend un insert tubulaire 96 pour éviter la déformation de la couche alvéolaire 64. Comme illustré sur les figures 5 et 7, l'insert tubulaire 96 est intercalé entre la tête 92 de la vis 88 et la couche réflectrice 66, la tête 92 de la vis 88 affleurant la surface extérieure de la couche acoustiquement résistive 62. Au moins un premier élément de liaison 82 comprend un fourreau déformable en compression intercalé entre l'écrou 94 et la lame de liaison 78.

Comme illustré sur les figures 5 et 7, les deuxièmes éléments de liaison 86 sont régulièrement répartis sur toute la circonférence de la nacelle. Chaque deuxième élément de liaison 86 est un boulon qui comprend une vis 98 avec une tige filetée 100 et une tête 102 ainsi qu'un écrou 104 configuré pour se visser sur la tige filetée 100, la lame de liaison 78 étant intercalée entre la couche extérieure 74 et la tête 102 de la vis 98. De préférence, l'écrou 104 est solidarisé à la couche extérieure 74 par tout moyen approprié comme par exemple à l'aide de rivets 106. Ainsi, la vis 98 peut-être vissée sans avoir besoin de maintenir l'écrou 104 avec un outil.

Au moins un deuxième élément de liaison 86 comprend un fourreau déformable 89 en compression, intercalé entre la tête 102 de la vis 98 et la lame de liaison 78 qui augmente la capacité de la liaison 86 à accepter les déformations radiales, imposées par des efforts et/ou des déplacements du moteur.

Selon un mode d'assemblage, les lames de liaison 78 sont fixées au premier conduit 52 grâce aux premiers éléments de liaison 82. Les lames de liaison 78 sont alors emmanchées autour du deuxième conduit 54, puis les deuxièmes éléments de liaison 86 sont mis en place pour relier les lames de liaison 78 et le deuxième conduit 54. Selon ce mode d'assemblage, les deuxième éléments de liaison 86 sont mis en place et serrés depuis l'extérieur des premier et deuxième conduits 52, 54.

Chaque lame de liaison 78 comprend une extrémité 108, orientée vers l'arrière de la nacelle, recourbée vers l'extérieur de la nacelle, pour favoriser l'emmanchement des lames de liaison 78 autour du deuxième conduit 54.

Selon une autre caractéristique visible sur la figure 6, la liaison 77 comprend des lames de centrage 110 comportant une première extrémité 112 solidarisée au premier conduit 52 par des éléments de fixation 114 et une deuxième extrémité 115 configurée pour s'emmancher autour deuxième conduit 54 et qui n'est pas solidarisée au deuxième conduit 54.

Chaque lame de centrage 110 est configurée pour se déformer de manière élastique selon la direction radiale. Ainsi, pour chaque lame de centrage 110, la deuxième extrémité 115 peut se déplacer selon la direction radiale par rapport à la première extrémité 112.

Ces lames de centrage 110 permettent de centrer le premier conduit 52 de l'entrée d'air 50 par rapport au deuxième conduit 54 de la motorisation 56 lorsque les lames de liaison 78 sont emmanchées autour du deuxième conduit 54, avant de les fixer au deuxième conduit 54.

La liaison 77 comprend au moins trois lames de centrage 110 réparties régulièrement autour du premier conduit 52. Comme illustré sur la figure 4, les lames de centrage 110 sont intercalées entre les lames de liaison 78.

Les lames de centrage 110 ont une largeur (dimension prise selon la circonférence) nettement inférieure à celle des lames de liaison 78. A titre d'exemple, les lames de centrage 110 ont une largeur comprise entre 2 et 10 cm.

Pour chaque lame de centrage 110, le deuxième conduit 52 comprend une encoche ménagée dans la paroi extérieure 74 du deuxième conduit 54, qui s'étend selon la direction longitudinale et qui est configurée pour loger une lame de centrage 110. La largeur de chaque encoche est sensiblement égale à la largeur de chaque lame de centrage 110 pour empêcher la rotation du premier conduit 52 par rapport au deuxième conduit 54.

Les éléments de fixation 114 sont répartis selon deux rangées R1, R2 qui s'étendent dans des plans transversaux différents, sur toute la circonférence de la nacelle, les éléments de fixation 114 étant régulièrement répartis sur chacune des rangées. Chaque élément de fixation 114 est un boulon qui comprend une vis 116 avec une tige filetée 118 et une tête 120 ainsi qu'un écrou 122 configuré pour se visser sur la tige filetée 118, la lame de centrage 110 étant intercalée entre la couche réflectrice 66 et l'écrou 122. Pour chaque élément de fixation 114, le panneau acoustique 60 comprend un insert tubulaire 124 pour éviter la déformation de la couche alvéolaire 64. L'insert tubulaire 124 est intercalé entre la tête 120 de la vis 116 et la couche réflectrice 66, la tête 120 de la vis 116 affleurant la surface extérieure de la couche acoustiquement résistive 62.

Au moins un élément de fixation 114 comprend un fourreau 126 déformable en compression, intercalé entre l'écrou 122 et la lame de centrage 110.

Selon un mode de réalisation, la deuxième extrémité 115 des lames de centrage 110 est recourbée vers l'extérieur de la nacelle pour favoriser l'emmanchement des lames de centrage 110 autour du deuxième conduit 54.

La deuxième extrémité 115 des lames de centrage 110 et/ou la paroi extérieure 74 du deuxième conduit 54 comprennent un revêtement ou sont réalisées en un matériau favorisant le glissement des lames de centrage 110 sur la surface de la paroi extérieure 74 du deuxième conduit 52. A titre d'exemple, comme illustré par la figure 6, la paroi extérieure 74 comprend un revêtement 128 en polytétrafluoroéthylène.

Les lames de liaison 78 et les lames de centrage 110 sont métalliques ou en matériau composite et réalisées en un matériau leurs conférant une capacité à se déformer de manière élastique selon la direction radiale.

Selon un mode de réalisation visible sur la figure 7, la liaison 77 comprend un centreur 130 relié au conduit 52 qui favorise le centrage du premier conduit 52 par rapport au deuxième conduit 54. Le centreur 130 comprend une pluralité de lames élastiques réparties sur la périphérie du premier conduit 52.

## Revendications

1. Nacelle d'aéronef comprenant :
- un premier conduit (52) qui est solidaire d'une entrée d'air (50) et qui comporte au moins un panneau acoustique,
- un deuxième conduit (54) qui est solidaire d'une motorisation (56), qui comporte au moins un panneau acoustique et qui entoure une soufflante,
- le premier conduit (52) étant configuré pour canaliser un flux d'air en direction du deuxième conduit (54),
- une liaison (77) entre le premier conduit (52) de l'entrée d'air (50) et le deuxième conduit (54) de la motorisation (56),
- des lames de liaison (78) qui comportent chacune une première zone de jonction (80) reliée au premier conduit (52) par au moins un élément de liaison (82) et une seconde zone de jonction (84) reliée au deuxième conduit (54) par au moins un élément de liaison (86), chaque lame de liaison (78) étant positionnée pour se déformer de manière élastique selon une direction radiale, pour chaque lame de liaison (78), une des première et deuxième zones de jonction (80, 84) pouvant se déplacer radialement par rapport à l'autre zone de jonction (80, 84),
**caractérisée en ce que** la liaison (77) comprend:
- des éléments de liaison (82, 86) comprenant chacun une tige orientée selon la direction radiale, et
- au moins trois lames de centrage (110) réparties régulièrement autour du premier conduit (52), intercalées entre les lames de liaison (78), qui comportent chacune une première extrémité (112) solidarisée au premier conduit (52) par des éléments de fixation (114) et une deuxième extrémité (115) configurée pour s'emmancher autour du deuxième conduit (54), non solidarisée au deuxième conduit (54), chaque lame de centrage (110) étant configurée pour se déformer de manière élastique selon une direction radiale, pour chaque lame de centrage (110), la deuxième extrémité (115) pouvant se déplacer selon la direction radiale par rapport à la première extrémité (112).

2. Nacelle d'aéronef selon la revendication 1, **caractérisée en ce que** chaque lame de liaison (78) comprend une portion médiane (87) courbe, intercalée entre les première et deuxième zones de jonction (80, 84) et excentrée par rapport à au moins une des première et deuxième zones de jonction (80, 84).

3. Nacelle d'aéronef selon la revendication 1 ou 2, **caractérisée en ce que** chaque lame de liaison (78) comprend une extrémité (108), orientée vers l'arrière de la nacelle, recourbée vers l'extérieur de la nacelle.

4. Nacelle d'aéronef selon l'une des revendications précédentes, **caractérisée en ce que** chaque deuxième élément de liaison (86) est un boulon qui comprend une vis (98) avec une tige filetée (100) et une tête (102) ainsi qu'un écrou (104) configuré pour se visser sur la tige filetée (100), la lame de liaison (78) étant intercalée entre une couche extérieure (74) du deuxième conduit (54) et la tête (102) de la vis (98), l'écrou (104) étant solidarisé à la couche extérieure (74).

5. Nacelle d'aéronef selon l'une des revendications précédentes, **caractérisée en ce que** la deuxième extrémité (115) des lames de centrage (110) est recourbée vers l'extérieur de la nacelle.

6. Nacelle d'aéronef selon l'une des revendications précédentes, **caractérisée en ce que** la deuxième extrémité (115) des lames de centrage (110) et/ou une paroi extérieure (74) du deuxième conduit (54) comprennent un revêtement ou sont réalisées en un matériau favorisant le glissement des lames de centrage (110) sur la surface de la paroi extérieure (74) du deuxième conduit (52).

7. Nacelle d'aéronef selon l'une des revendications précédentes, **caractérisée en ce que** le deuxième conduit (52) comprend, pour chaque lame de centrage (110), une encoche ménagée dans une paroi extérieure (74) du deuxième conduit (54), qui s'étend selon la direction longitudinale et qui est configurée pour loger une lame de centrage (110), la largeur de chaque encoche étant sensiblement égale à la largeur de chaque lame de centrage (110) pour empêcher la rotation du premier conduit (52) par rapport au deuxième conduit (54).

## Patentansprüche

1. Gondel eines Luftfahrzeugs, mit:
- einem ersten Kanal (52), der mit einem Lufteinlass (50) verbunden ist und der mindestens eine akustische Platte aufweist,
- einem zweiten Kanal (54), der mit einer Motorisierung (56) verbunden ist, der mindestens eine akustische Platte aufweist und der ein Gebläse umgibt,
- wobei der erste Kanal (52) dazu eingerichtet ist, eine Luftströmung in Richtung des zweiten Kanals (54) zu kanalisieren,
- einer Verbindung (77) zwischen dem ersten Kanal (52) des Lufteinlasses (50) und dem zweiten Kanal (54) der Motorisierung (56),
- Verbindungsstreifen (78), die jeweils einen ersten Verbindungsbereich (80) aufweisen, der durch mindestens ein Verbindungselement (82) mit dem ersten Kanal (52) verbunden ist, und einen zweiten Verbindungsbereich (84) aufweisen, der durch mindestens ein Verbindungselement (86) mit dem zweiten Kanal (54) verbunden ist, wobei jeder Verbindungsstreifen (78) so angeordnet ist, dass er in radiale Richtung elastisch verformbar ist, wobei sich bei jedem Verbindungsstreifen (78) einer des ersten und zweiten Verbindungsbereiche (80, 84) in radiale Richtung relativ zum anderen Verbindungsbereich bewegen kann,
**dadurch gekennzeichnet, dass** die Verbindung (77) umfasst:
- Verbindungselemente (82, 86), die jeweils einen radial ausgerichteten Schaft aufweisen, und
- mindestens drei Zentrierstreifen (110), die gleichmäß9g um den ersten Kanal (52) herum verteilt sind und zwischen den Verbindungsstreifen (78) angeordnet sind und die jeweils ein erstes Ende (112) aufweisen, das an dem ersten Kanal (52) durch Befestigungselemente (114) befestigt ist, und ein zweites Ende (115), das so eingerichtet ist, dass es den zweiten Kanal (54) umgibt, aber nicht mit dem zweiten Kanal (54) verbunden ist, wobei jeder Zentrierstreifen (110) so eingerichtet ist, dass er sich in eine radiale Richtung elastisch verformt, wobei sich das zweite Ende (115) bei jedem Zentrierstreifen (110) in radiale Richtung relativ zum ersten Ende (112) bewegen kann.

2. Gondel eines Luftfahrzeugs nach Anspruch 1, **dadurch gekennzeichnet, dass** jeder Verbindungsstreifen (78) einen gekrümmten Mittelabschnitt (87) aufweist, der zwischen dem ersten und dem zweiten Verbindungsbereich (80, 84) angeordnet ist und der in Bezug auf zumindest einen der ersten und zweiten Verbindungsbereiche (80, 84) exzentrisch ist.

3. Gondel eines Luftfahrzeugs nach Anspruch 1 oder 2, **dadurch gekennzeichnet, dass** jeder Verbindungsstreifen (78) ein Ende (108) aufweist, das zur Rückseite der Gondel hin ausgerichtet und zur Außenseite der Gondel hin gekrümmt ist.

4. Gondel eines Luftfahrzeugs nach einem der vorhergehenden Ansprüche, **dadurch gekennzeichnet, dass** jedes zweite Verbindungselement (86) ein Bolzen ist, der eine Schraube (98) mit einem Gewindeschaft (100) und einem Kopf (102) und eine Mutter (104) aufweist, die zum Aufschrauben auf den Gewindeschaft (100) eingerichtet ist, wobei der Verbindungsstreifen (78) zwischen einer Außenschicht (74) des zweiten Kanals (54) und dem Kopf (102) der Schraube (98) angeordnet ist und die Mutter (104) an der Außenschicht (74) befestigt ist.

5. Gondel eines Luftfahrzeugs nach einem der vorhergehenden Ansprüche, **dadurch gekennzeichnet, dass** das zweite Ende (115) des Zentrierstreifens (110) zur Außenseite der Gondel hin gekrümmt ist.

6. Gondel eines Luftfahrzeugs nach einem der vorhergehenden Ansprüche, **dadurch gekennzeichnet, dass** das zweite Ende (115) des Zentrierstreifens (110) und/oder eine Außenwand (74) des zweiten Kanals (54) eine Beschichtung aufweisen oder aus einem Material hergestellt sind, das das Gleiten der Zentrierstreifen (110) auf der Oberfläche der Außenwand (74) des zweiten Kanals (52) fördert.

7. Gondel eines Luftfahrzeugs nach einem der vorhergehenden Ansprüche, **dadurch gekennzeichnet, dass** der zweite Kanal (52) für jeden Zentrierstreifen (110) eine Kerbe aufweist, die in einer Außenwand (74) des zweiten Kanals (54) ausgebildet ist, welche sich in der Längsrichtung erstreckt und welche dazu eingerichtet ist, einen Zentrierstreifen (110) aufzunehmen, wobei die Breite jeder Kerbe im Wesentlichen gleich der Breite jedes Zentrierstreifens (110) ist, um eine Drehung des ersten Kanals (52) relativ zum zweiten Kanal (54) zu verhindern.

## Claims

1. Aircraft nacelle including :
- a first conduit (52) that is rigidly connected to an air inlet (50) and that includes at least one acoustic panel,
- a second conduit (54) that is rigidly connected to an engine (56), that includes at least one acoustic panel and that surrounds a fan,
- the first conduit (52) being designed to channel an air flow towards the second conduit (54),
- a link (77) between the first conduit (52) of the air inlet (50) and the second conduit (54) of the engine (56),
- linking strips (78) that each have a first joining zone (80) linked to the first conduit (52) by at least one linking element (82) and a second joining zone (84) linked to the second conduit (54) by at least one linking element (86), each linking strip (78) being positioned to deform elastically in a radial direction, for each linking strips (78), one of the first and second joining zones (80, 84) able to move radially in relation to the other joining zone (80, 84),
**characterized in that** the link (77) comprises:
- linking elements (82, 86) each having a stem oriented in the radial direction, and
- at least three centering strips (110) distributed regularly about the first conduit (52), interposed between the linking strips (78), that each have a first end (112) rigidly connected to the first conduit (52) by attachment elements (114) and a second end (115) that is designed to fit about the second conduit (54), not rigidly connected to the second conduit (54), each centering strip (110) being designed to deform elastically in a radial direction, for each centering strip (110), the second end (115) able to move radially in relation to the first end (112).

2. Aircraft nacelle according to claim 1, wherein each linking strip (78) has a curved mid portion (87) that is interposed between the first and second joining zones (80, 84) and arranged off-center in relation to at least one of the first and second joining zones (80, 84).

3. Aircraft nacelle according to claim 1 or 2, wherein each linking strip (78) has one end (108) that is oriented towards the rear of the nacelle and that is curved towards the outside of the nacelle.

4. Aircraft nacelle according to one of the preceding claims, wherein each second linking element (86) is a bolt that comprises a screw (98) with a threaded stem (100) and a head (102) as well as a nut (104) that is designed to be screwed onto the threaded stem (100), the linking strip (78) being interposed between an outer layer (74) of the second conduit (54) and the head (102) of the screw (98), the nut (104) being rigidly connected to the outer layer (74).

5. Aircraft nacelle according to one of the preceding claims, wherein the second end (112) of the centering strips (110) is curved towards the outside of the nacelle.

6. Aircraft nacelle according to one of the preceding claims, wherein the second end (115) of the centering strips (110) and/or an outer wall (74) of the second conduit (54) have a coating or are made of a material that enables the centering strips (110) to slide over the surface of the outer wall (74) of the second conduit (52).

7. Aircraft nacelle according to one of the preceding claims, wherein the second conduit (52) has, for each centering strip (110), a notch formed in an outer wall (74) of the second conduit (54) that extends in the longitudinal direction and that is designed to receive a centering strip (110), the width of each notch being substantially equal to the width of each centering strip (110) to prevent the first conduit (52) from rotating in relation to the second conduit (54).
